# EUROPÄISCHE PATENTANMELDUNG

(11) **EP 4 792 703 A1**
(43) Veröffentlichungstag der Anmeldung: **19.08.2026**
(21) Anmeldenummer: 25157702.9
(22) Anmeldetag: 13.02.2025
(51) Int. Cl.: A47J 43/07, A47J 27/21

(54) **BASISGERÄT FÜR EINE KÜCHENMASCHINE UND WECHSELBARES ZUBEHÖRGEFÄSS**

(71) Anmelder: Vorwerk & Co. Interholding GmbH, 42275 Wuppertal (DE)
(72) Erfinder: BECKMANN, Nils, 42853 Remscheid (DE); BAYARD, Christian, 58456 Witten (DE); INGENLATH, Philipp, 58332 Schwelm (DE); SASUNNA, Giuseppe, 42651 Solingen (DE); WAHLE, Volker, 46499 Hamminkeln (DE); BAMBECK, Daniel, 45149 Essen (DE); SCHÖNHOFF, Helmut, 42897 Remscheid (DE); WOJKE, Sigurd, 45549 Sprockhövel (DE)
(74) Vertreter: Gille Hrabal Partnerschaftsgesellschaft mbB Patentanwälte

(57) **Zusammenfassung**

Die Erfindung betrifft ein Basisgerät (1) für eine Küchenmaschine zum Zubereiten einer Speise (20), wobei das Basisgerät (1) eine Steuerung (2) und eine Aufnahmeeinrichtung (3) zum Aufnehmen und elektrischen Anschließen eines wechselbaren Zubehörgefäßes (10) umfasst, wobei die Aufnahmeeinrichtung (3) mindestens eine aufnahmeseitige Steckverbindungseinheit (4) für das elektrische Anschließen umfasst. Die aufnahmeseitige Steckverbindungseinheit (4) ist im montierten Zustand beweglich, derart, dass sich zumindest mit einem Teil der aufnahmeseitige Steckverbindungseinheit (4) mit einem Zubehörgefäß (10) mitbewegen kann, wenn es über die aufnahmeseitige Steckverbindungseinheit (4) an die Aufnahmeeinrichtung (3) elektrisch angeschlossen ist. Eine besonders zuverlässige Übertragung von Datensignalen zwischen der Steuerung (2) des Basisgeräts (1) und dem Gefäßzubehör (10) kann so ermöglicht werden. Die Erfindung betrifft ferner ein entsprechendes Zubehörgefäß.

## Beschreibung

Die Erfindung betrifft ein Basisgerät für eine Küchenmaschine zum Zubereiten einer Speise, wobei das Basisgerät eine Steuerung und eine Aufnahmeeinrichtung zum Aufnehmen und elektrischen Anschließen eines wechselbaren Zubehörgefäßes umfasst, wobei die Aufnahmeeinrichtung mindestens eine aufnahmeseitige Steckverbindungseinheit für das elektrische Anschließen umfasst. Die Erfindung betrifft ferner das wechselbare Zubehörgefäß.

Beispiele für solche Basisgeräte und Zubehörgefäße lassen sich im Stand der Technik bei Kochmixern finden, dessen Basisgeräte als aufnahmeseitige Steckverbindungseinheit einen buchsenartigen Steckkontakt haben, die als eine federnde Klammer realisiert ist. Zwei Kontaktarme sind dabei zueinander geneigt, um einen Spalt zu bilden, in den ein Kontaktstift einer zubehörseitigen Steckverbindungseinheit reingesteckt werden kann, wodurch die beiden Kontaktarme elastisch verdrängt werden, so dass der Spalt dem Durchmesser des reingesteckten Kontaktstiftes entspricht. Ein Zubehörgefäß mit solchen Kontaktstiften ist in der Druckschrift EP3292806B1 offenbart. Die beiden Kontaktarme klemmen den Kontaktstift ein und stellen eine elektrische Verbindung zum Kontaktstift her. Die beiden Arme sind im montierten Zustand so in einem Gehäuseteil angeordnet, dass abgesehen von normalen Fertigungs- und Montagetoleranzen keine Beweglichkeit des buchsenartigen Steckkontakts oder eines Teils davon möglich oder vorgesehen ist, sondern lediglich ein federndes, elastisches Auslenken der zwei Kontaktarme beim Reinstecken und Rausziehen des Kontaktstifts einer zubehörseitigen Steckverbindungseinheit eines Gefäßzubehörs, wie z.B. ein Topf mit Heizelement und Mixmesser. Insgesamt weisen aus dem Stand der Technik bekannte Basisgeräte fünf solcher aufnahmeseitigen Steckverbindungseinheit auf, von denen zwei Steckverbindungseinheiten für die Stromversorgung des Heizelements, zwei Steckverbindungseinheiten für das Messen eines temperaturabhängigen Widerstandes zur einfachen analogen Temperaturbestimmung vom Gefäßzubehör sowie ein Erdungskontakt vorgesehen sind. Durch die Zunahme von Elektronik, Sensorik und Intelligenz im Bereich der teilautomatisierten Speisenzubereitung steigen auch die Anforderungen an Signalübertragungen durch die Steckverbindungen.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, ein weiterentwickeltes Basisgerät nebst Zubehörgefäß bereitzustellen.

Zur Lösung der Aufgabe dient ein Basisgerät gemäß dem Anspruch 1 und ein Zubehörgefäß gemäß Anspruch 15. Vorteilhafte Ausführungsformen ergeben sich aus den Unteransprüchen.

Zur Lösung der Aufgabe dient in einem ersten Aspekt der Erfindung ein Basisgerät für eine Küchenmaschine zum Zubereiten einer Speise, wobei das Basisgerät eine Steuerung und eine Aufnahmeeinrichtung zum Aufnehmen und elektrischen Anschließen eines wechselbaren Zubehörgefäßes umfasst. Die Aufnahmeeinrichtung umfasst mindestens eine aufnahmeseitige Steckverbindungseinheit für das elektrische Anschließen, also für das elektrische Anschließen eines wechselbaren Zubehörgefäßes. Die aufnahmeseitige Steckverbindungseinheit ist im montierten Zustand zumindest teilweise beweglich, derart, dass sich zumindest ein Teil der aufnahmeseitigen Steckverbindungseinheit mit einem Zubehörgefäß mitbewegen kann, insbesondere bei Vibrationen des Zubehörgefäßes während einer Zubereitung einer Speise, wenn es (Zubehörgefäß) über die aufnahmeseitige Steckverbindungseinheit an die Aufnahmeeinrichtung elektrisch angeschlossen ist. Eine besonders zuverlässige Übertragung von Datensignalen zwischen der Steuerung der Küchenmaschine und dem Gefäßzubehör kann so ermöglicht werden.

Die aufnahmeseitige Steckverbindungseinheit der bekannten Basisgeräte haben keinen Teil, der sich im montierten Zustand mit einem Zubehörgefäß mitbewegen kann, wenn das Zubehörgefäß über die aufnahmeseitige Steckverbindungseinheit an die Aufnahmeeinrichtung elektrisch angeschlossen ist.

Der Erfindung liegt der Gedanke zugrunde, dass Verschleiß durch Reibkontakt (Reibung an der Kontaktfläche von einem Kontaktstecker-Element und einem Kontaktbuchsen-Element) mit der Zeit zu geringfügigen verschleißbedingten Defekten an den Oberflächen der Kontakte führen, unter denen das Leiten von Datensignalen leiden kann. Weil allerdings die aufnahmeseitige Steckverbindungseinheit in der Aufnahmeeinrichtung verbleibt, wenn ein Zubehörgefäß entnommen oder gewechselt wird, kommt es bei jeder Entnahme und jedem Wechsel des Zubehörgefäß auch bei dem erfindungsgemäßen Basisgerät dennoch häufig zu Reibung an den Oberflächen der Kontakte. Jedoch wurde erkannt, dass durch eine sich im montierten Zustand zumindest teilweise bewegliche aufnahmeseitige Steckverbindungseinheit, die sich zumindest mit einem Teil mit einem angeschlossenen Zubehörgefäß insbesondere im Umfang eines axialen und/oder radialen Spiels mitbewegen kann, die Reibung und der Verschleiß infolge von Bewegungen des Zubehörgefäßes durch die Zubereitung einer Speise insgesamt auf ein Maß begrenzen lässt, so dass über eine vorgesehene, mehrjährige Lebensdauer eines Basisgeräts für eine Küchenmaschine mit täglicher Nutzung ein Datensignal besonders zuverlässig übertragen werden.

Ein wechselbares Zubehörgefäß ist ein Zubehör mit einem Gefäß für die Speisenzubereitung. Das Zubehörgefäß kann neben dem Gefäß auch einen Deckel umfassen. Das Zubehörgefäß kann zudem eine oder mehrere Funktionskomponente umfassen, wie z.B. ein Heizelement, eine Aufnahme für ein Werkzeug, ein Mischwerkzeug und/oder ein Schneidwerkzeug. In einer Ausgestaltung kann der Deckel eine Funktionskomponente z.B. in Form eines Schneidwerkzeugs bereitstellen, insbesondere zur Erweiterung der Funktion oder Funktionen des Zubehörgefäßes, das keine Funktionskomponente oder ein oder mehrere Funktionskomponenten enthalten kann. In einer Ausgestaltung des Zubehörgefäßes umfasst das Zubehörgefäß ein Gefäß und ein in dem Deckel befindliches Schneidwerkzeug. Das Zubehörgefäß kann einen oder mehrere Sensoren zur Temperaturmessung und/oder zur Erkennung eines Deckels oder eines Deckelzustands umfassen. Das Zubehörgefäß kann eine Signalverarbeitungseinheit für ein Verarbeiten von Sensordaten des mindestens einen Sensors und/oder zur Kommunikation insbesondere mit der Steuerung des Basisgeräts umfassen, bevorzugt durch den Austausch digitaler Signale.

Ein wechselbares Zubehörgefäß ist kein Bestandteil des Basisgeräts. Das Basisgerät selbst verfügt über die Aufnahmeeinrichtung, mit der ein Zubehörgefäß aufgenommen und elektrisch angeschlossen werden kann. Es können mehrere gleiche oder mehrere unterschiedliche Zubehörgefäße separat von dem Basisgerät existieren, die dann je nach Bedarf des Benutzers mit der Aufnahmeeinrichtung verbunden, davon entfernt und/oder gewechselt werden können. Insbesondere umfasst das Basisgerät einen Elektromotor zum mechanischen Antreiben mindestens einer Funktionskomponente des Zubehörgefäßes, bevorzugt des Misch- und/oder Schneidwerkzeug, vorzugsweise über eine mechanische Schnittstelle der Aufnahmeeinrichtung.

Mit elektrischem Anschließen ist ein elektrisches Verbinden zum Übertragen von Datensignalen und/oder zur elektrischen Energieversorgung gemeint. Mit Aufnehmen ist gemeint, dass ein Zubehörgefäß so auf der Aufnahmeeinrichtung angeordnet und/oder mit der Aufnahmeeinrichtung mechanisch verbunden werden kann, dass eine Speise in dem Zubehörgefäß zubereitet werden kann. Ein Zubehörgefäß, das nicht von der Aufnahmeeinrichtung aufgenommen ist, könnte während der Zubereitung einer Speise unplanmäßig seine Position ändern, so dass eine störungsfreie Zubereitung der Speise nicht sichergestellt wäre. Insbesondere sieht die Aufnahmeeinrichtung zum Aufnehmen des Zubehörgefäßes eine Führungs- und/oder Verriegelungseinrichtung vor. Ein Zubereiten einer Speise kann auch ohne ein Verriegeln des Zubehörgefäßes mit dem Basisgerät durchgeführt werden.

Die Steuerung kann mehrere, örtlich getrennte Steuerungseinheiten in dem Basisgerät umfassen, die kabelgebunden oder kabellos miteinander verbunden sind. Es ist ferner grundsätzlich möglich, dass ein Teil der Steuerung durch eine externe Recheneinheit, wie z.B. Smartphone oder Cloud-Rechner realisiert ist, die mit einem in dem Basisgerät integrierten Teil der Steuerung kabellos kommuniziert.

Mehrere Steckverbindungseinheiten können zusammen ein Steckverbindungsmodul bilden. In einer Ausgestaltung weist ein solches Steckverbindungsmodul sowohl die mindestens eine aufnahmeseitige Steckverbindungseinheit auf, die im montierten Zustand zumindest teilweise beweglich ist, derart, dass sie sich zumindest mit einem Teil mit einem angeschlossenen Zubehörgefäß mitbewegen kann, als auch mindestens eine Steckverbindungseinheit mit einer unterschiedlichen Bauart, die im montierten Zustand nicht zumindest teilweise beweglich ist, derart, dass sich zumindest ein Teil davon mit einem angeschlossenen Zubehörgefäß mitbewegen könnte, also ähnlich wie bei den eingangs beschriebenen Basisgeräten, worunter auch z.B. der TM5 und TM6 der Anmelderin fallen kann. Die mindestens eine Steckverbindungseinheit mit einer unterschiedlichen Bauart ist (jeweils) insbesondere durch eine federnde Klammer umgesetzt. Bevorzugt sind zwei Kontaktarme dabei zueinander geneigt, um einen Spalt zu bilden, in den ein Kontaktstift einer zubehörseitigen Steckverbindungseinheit reingesteckt werden kann, wodurch die beiden Kontaktarme elastisch verdrängt werden, so dass der Spalt dem Durchmesser des reingesteckten Kontaktstiftes entspricht.

Bevorzugt werden zwei unterschiedliche Ausführungen von federnden Klammern eingesetzt, von denen eine erste Ausführung (bevorzugt zur Erdung) für einen größeren Kontaktstiftdurchmesser dimensioniert ist als eine zweite Ausführung, die bevorzugt benachbart neben der ersten Ausführung in dem Steckverbindungsmodul angeordnet ist. Insbesondere klemmen die beiden Kontaktarme den Kontaktstift im angeschlossenen Zustand ein und stellen eine elektrische Verbindung zum Kontaktstift her. Die beiden Arme erlauben im montierten Zustand - abgesehen von normalen Fertigungs- und Montagetoleranzen - keine Beweglichkeit des buchsenartigen Steckkontakts in Form der federnden Klammer für ein Mitbewegen eines angeschlossenen Zubehörgefäßes, sondern lediglich ein federndes, elastisches Auslenken der zwei Kontaktarme beim Reinstecken und Rausziehen des Kontaktstifts einer zubehörseitigen Steckverbindungseinheit eines Gefäßzubehörs, wie z.B. ein Topf mit Heizelement und Mixmesser.

In einer Ausführungsform weist die mindestens eine aufnahmeseitige Steckverbindungseinheit ein Kontaktbuchsen-Element auf, das sich mit einem Zubehörgefäß mitbewegen kann, wenn es über die aufnahmeseitige Steckverbindungseinheit an die Aufnahmeeinrichtung elektrisch angeschlossen ist, oder ein Kontaktstecker-Element auf, das sich mit einem Zubehörgefäß mitbewegen kann, wenn es über die aufnahmeseitige Steckverbindungseinheit an die Aufnahmeeinrichtung elektrisch angeschlossen ist. Eine besonders zuverlässige Steckkontaktverbindung kann so erreicht werden. Das Kontaktbuchsen-Element bzw. das Kontaktstecker-Element ist also der Teil oder gehört also zu dem Teil der aufnahmeseitigen Steckverbindungseinheit, der sich im montierten Zustand mit einem Zubehörgefäß mitbewegen kann, wenn es (Zubehörgefäß) über die aufnahmeseitige Steckverbindungseinheit an die Aufnahmeeinrichtung elektrisch angeschlossen ist.

Eine Steckverbindungseinheit mit einem Kontaktbuchsen-Element kann auch als weibliche Steckverbindungseinheit bezeichnet werden. Eine Steckverbindungseinheit mit einem Kontaktstecker-Element kann auch als männliche Steckverbindungseinheit bezeichnet werden. Wenn in einer Ausgestaltung die aufnahmeseitige Steckverbindungseinheit ein Kontaktbuchsen-Element aufweist, ist die (weiblichen) aufnahmeseitige Steckverbindungseinheit zum Verbinden mit einem Kontaktstecker-Element einer (männliche) zubehörseitigen Steckverbindungseinheit vorgesehen. Wenn in einer alternativen Ausgestaltung die aufnahmeseitige Steckverbindungseinheit ein Kontaktstecker-Element aufweist, ist die (männliche) aufnahmeseitige Steckverbindungseinheit zum Verbinden mit einem Kontaktbuchsen-Element einer (weiblichen) zubehörseitigen Steckverbindungseinheit vorgesehen.

In einer Weiterentwicklung gibt es ein aufnahmeseitiges Steckverbindungsmodul und/oder ein zubehörseitiges Steckverbindungsmodul. Insbesondere hat ein aufnahmeseitiges Steckverbindungsmodul ausschließlich männliche oder weibliche zubehörseitige Steckverbindungseinheiten, die verschiedenartig ausgeführt sein können, z.B. in Form von Kontaktbuchsen-Elementen und buchsenartigen Steckkontakten oder Kontaktstecker-Elementen und Kontaktstiften. Insbesondere hat ein zubehörseitiges Steckverbindungsmodul ausschließlich weibliche oder männliche zubehörseitige Steckverbindungseinheiten.

In einer Ausführungsform ist die aufnahmeseitige Steckverbindungseinheit so beschaffen, dass der zumindest eine Teil der aufnahmeseitigen Steckverbindungseinheit, insbesondere das Kontaktstecker-Element oder das Kontaktbuchsen-Element, beweglich ist, und dass die axiale Beweglichkeit des zumindest einen Teils der aufnahmeseitigen Steckverbindungseinheit durch ein axiales Spiel begrenzt wird, so dass sich der zumindest eine Teil der aufnahmeseitigen Steckverbindungseinheit mit einem Zubehörgefäß axial im Umfang (also im Ausmaß) des axialen Spiels mitbewegen kann, wenn es über die aufnahmeseitige Steckverbindungseinheit an die Aufnahmeeinrichtung elektrisch angeschlossen ist. Eine besonders zuverlässige Übertragung von Datensignalen kann so ermöglicht werden.

Das axiale Spiel gibt den maximalen Bewegungsspielraum in axialer Richtung an, also den größt-möglichen Weg, der in axialer Richtung durch die Bewegung zurückgelegt werden kann. In einer Ausgestaltung, in der das Kontaktbuchsen-Element dem beweglichen Teil der aufnahmeseitigen Steckverbindungseinheit entspricht, liegt beispielsweise ein axiales Spiel von 0,5 mm vor, wenn sich ein Bauraum in axialer Richtung 0,5 mm weiter erstreckt als die axiale Länge des Kontaktbuchsen-Element, das sich im montierten und angeschlossenen Zustand der aufnahmeseitigen Steckverbindungseinheit axial frei in dem Bauraum bewegen kann.

In einer Ausführungsform beträgt das das axiale Spiel mindestens 0,4 mm, insbesondere wenn der bewegliche Teil dem Kontaktbuchsen-Element entspricht. Es wurde erkannt, dass diese Untergrenze des Spiels bereits ausreicht, um über die vorgesehene Lebensdauer des Basisgeräts Datensignale zuverlässig übertragen zu können. Insbesondere wird eine Störung durch axiale Vibrationen reduziert oder vermieden.

In einer Ausführungsform beträgt das axiale Spiel höchstens 1 mm. Dies ermöglicht eine über die Lebensdauer besonders zuverlässige Datenübertragung. Einem erhöhten Verschleiß durch das Anschließen, Entfernen oder Wechseln des Zubehörgefäßes kann so vorgebeugt werden.

In einer Ausführungsform ist die aufnahmeseitige Steckverbindungseinheit so beschaffen, dass im angeschlossenen Zustand das axiale Spiel größer ist als ein radiales Spiel, kein radiales Spiel vorliegt, und/oder eine radiale Bewegung zumindest eines Teils der aufnahmeseitigen Steckverbindungseinheit nur durch ein elastisches Verformen des beweglichen Teils der aufnahmeseitige Steckverbindungseinheit, insbesondere des Kontaktbuchsen-Element, möglich ist. Eine zuverlässige Steckverbindung mit nicht zu viel und nicht zu wenig Druck auf die Steckverbindung kann so für die gesamte Lebensdauer erhalten werden. Beispielsweise lässt sich das Kontaktstecker-Element somit leicht in das Kontaktbuchsen-Element durch den Benutzer manuell reinstecken und rausziehen, wobei zugleich eine zuverlässige Datensignalübertragung möglich ist.

In einer Ausführungsform ist das axiale Spiel im angeschlossenen Zustand größer als das radiale Spiel und/oder das axiale Spiel im nicht-angeschlossenen Zustand kleiner als das radiale Spiel. Eine besonders zuverlässige Datensignalübertragung wird so ermöglicht. In einer Ausgestaltung beträgt das radiale Spiel des Kontaktbuchsen-Elements im montierten Zustand mindestens 0,3 mm und/oder höchstens 0,5 mm, wenn kein angeschlossener Zustand vorliegt.

In einer Ausführungsform ist das Basisgerät so eingerichtet ist, dass über die aufnahmeseitige Steckverbindungseinheit im angeschlossenen Zustand ein analoges oder digitales Signal übertragen wird, insbesondere zwischen der Steuerung der Basisstation mit der Signalverarbeitungseinheit des Zubehörgefäßes. In einer alternativen oder ergänzenden Ausführungsform ist das Basisgerät so eingerichtet ist, dass ein angeschlossenes Zubehörgefäß mit elektrischer Energie versorgt werden kann, insbesondere mit Netzspannung. Die Anzahl von aufnahmeseitigen Steckverbindungseinheiten kann so reduziert werden. Bevorzugt erfolgt der digitale Signaldatenaustausch und die Stromversorgung mithilfe von zwei aufnahmeseitigen Steckverbindungseinheiten, die insbesondere unmittelbar nebeneinander im aufnahmeseitigen Steckverbindungsmodul angeordnet sind. Vorzugsweise erfolgt die Kommunikation bidirektional mittels halb-duplex, mittels PLC (Power Line Prinzip) und/oder durch Strompulse (und damit verbundenen Schwankung der Versorgungsspannung) jeweils über dieselben aufnahmeseitigen Steckverbindungseinheiten.

In einer Ausgestaltung ist durch das elektrische Anschließen ein Übertragen von digitalen Signaldaten vorgesehen. Durch die vorgesehen Beweglichkeit im Montierten und angeschlossenen Zustand wird eine zuverlässige digitalen Signaldatenübertragung über die Lebensdauer eines durchschnittlich betriebenen Basisgeräts ermöglicht. Ein Erkennen des Zubehörgefäßes und/oder eines Zustands des Zubehörgefäßes mithilfe der von dem Zubehörgefäßes übertragenen, digitalen Signaldaten kann so ermöglicht werden. In einer Ausgestaltung ist die Steuerung des Basisgeräts so konfiguriert, dass sie den Vorgang der Speisenzubereitung an das Zubehörgefäßes und dessen Zustand anpassen kann, z.B. durch Begrenzen der Drehzahl eines Misch- oder Schneidwerkzeugs, wenn ein Gefäßzubehör keinen Deckel hat oder ein Deckel nicht geschlossen ist. Wegen dem höheren Herstellungsaufwand und der großen Störanfälligkeit wurden digitale Datenverbindungen in den Bereichen eines Basisgeräts mit großen Vibrationen beim Kochen durch Erhitzen, Mischen und/oder Rühren, die besonders an der Schnittstelle zum Zubehörgefäß und der Aufnahmeeinrichtung auftreten, bislang verworfen. Es wurde jedoch erkannt, dass die Vorteile aus dem Einsatz einer digitalen Schnittstelle zwischen dem Zubehörgefäß und der Aufnahmeeinrichtung zum Erkennen des Zubehörgefäßes und dessen Zustand den Mehraufwand einer entsprechenden aufwändigeren Herstellung überkompensieren.

In einer Ausgestaltung ist die aufnahmeseitige Steckverbindungseinheit so eingerichtet, dass das Kontaktbuchsen-Element in eine axiale Richtung beweglich geführt ist, derart, dass sich im angeschlossenen Zustand das Kontaktbuchsen-Element mit einem Kontaktstecker-Element axial mitbewegen kann. Ein besonders zuverlässige Signaldatenübertragung auch von digitalen Daten neben der bekannten widerstandsbasierten Temperaturbestimmung bzw. analogen Signalen ist so möglich.

In einer Ausführungsform ist die aufnahmeseitige Steckverbindungseinheit so eingerichtet, dass wenn ein Zubehörgefäß (mit einem Kontaktstecker-Element oder einem Kontaktbuchsen-Element) an die Aufnahmeeinrichtung (mit einem Kontaktbuchsen-Element oder einem Kontaktstecker-Element) angeschlossen wird, das Kontaktstecker-Element axial in das Kontaktbuchsen-Element eingeführt wird. In einer alternativen oder ergänzenden Ausführungsform weitet sich das Kontaktbuchsen-Element in eine radiale Richtung, die quer zur axialen Richtung orientiert ist, elastisch auf, um das Kontaktstecker-Element aufzunehmen und einen Berührkontakt für das elektrische Verbinden des Basisgeräts mit einem Zubehörgefäß herzustellen. Eine besonders zuverlässige, lösbare elektrische Verbindung wird so ermöglicht.

Axial oder axiale Richtung bezieht sich in der gesamten vorliegenden Offenbarung auf die Orientierung (einer imaginären Achse), entlang der das Anschließen eines Zubehörgefäßes an dem Basisgerät durch ein Reinstecken erfolgt oder erfolgen kann. Radial oder radiale Richtung meint quer zur axialen Richtung orientiert bzw. von einer (imaginären) Mittelachse (falls vorhanden) weg.

In einer Ausführungsform weist die aufnahmeseitige Steckverbindungseinheit das Kontaktbuchsen-Element auf und das Kontaktbuchsen-Element hat im Querschnitt betrachtet (also von oben in axialer Richtung auf den Querschnitt betrachtet) eine C-Form. Ein besonders zuverlässiges, elastisches radiales Aufweiten für das elektrische Verbinden mit einem eingeführten Kontaktstecker-Element kann so ermöglicht werden.

In einer alternativen oder ergänzenden Ausführungsform weist die aufnahmeseitige Steckverbindungseinheit das Kontaktbuchsen-Element und einen darin montierten Hohlkörper auf, wobei das Kontaktbuchsen-Element axial in dem sich axial erstreckenden Hohlkörper geführt ist. Eine zuverlässige Steckverbindung mit nicht zu viel und nicht zu wenig Druck auf die Steckverbindung kann so für die gesamte Lebensdauer erhalten werden. Beispielsweise lässt sich das Kontaktstecker-Element somit leicht in das Kontaktbuchsen-Element durch den Benutzer manuell reinstecken und rausziehen, wobei zugleich eine zuverlässige Datensignalübertragung möglich ist. Wenn das Kontaktstecker-Element in das Kontaktbuchsen-Element reingesteckt wird, erfolgt eine Begrenzung der radial elastischen Aufweitung des Kontaktbuchsen-Elements durch den Hohlkörper, der also einen radialen Anschlag bildet.

In einer Ausführungsform weist die aufnahmeseitige Steckverbindungseinheit das Kontaktbuchsen-Element auf, wobei das Kontaktbuchsen-Element eine axiale Durchgangsöffnung mit einem verengten Bereich aufweist. Eine elastische, radiale Verdrängung und Aufweitung des verengten Bereiches beim Herstellen des Berührkontakt kann so für ein zuverlässiges elektrisches Verbinden erzielt werden. Eine axiale Durchgangsöffnung kann eine umfänglich geschlossene Kontur oder geöffnete Kontur, z.B. mit C-förmigen Querschnitt, haben. Mit anderen Worten hat auch ein im Querschnitt betrachtet C-förmig geformtes Kontaktbuchsen-Element eine Durchgangsöffnung. In einer Ausgestaltung ist der verengte Bereich in axialer Richtung konkav gewölbt.

In einer Ausgestaltung ist das Kontaktbuchsen-Element zylinderartig geformt, vorzugsweise mit einem axialen Schlitz zum Erzeugen eines C-förmigen Querschnitts und/oder in axialer Richtung betrachtet mit einer Sanduhr-artigen Form. Bevorzugt ist der verengte Bereich nicht mittig in axialer Erstreckung des Kontaktbuchsen-Element betrachtet, sondern befindet sich näher an dem oberen Ende als an dem unteren Ende des Kontaktbuchsen-Elements, das mit dem Kabel verbunden ist. Vorzugsweise ist der verengte Bereich größer als ein Drittel der Länge des zylinderförmigen Teils und/oder des Teils mit dem C-förmigen Querschnitts des Kontaktbuchsen-Elements.

In einer Ausgestaltung ist das Kontaktbuchsen-Element zylinderartig geformt, insbesondere mit einem kontanten Durchmesser über die überwiegende axiale Länge. Bevorzugt hat das zylinderartig geformte Kontaktbuchsen-Element einen einheitlichen, konstanten Durchmesser mit Ausnahme des verengten Bereiches. Bevorzugt grenzt der verengte Bereich in axialer Richtung betrachtet axial davor und/oder danach an die zylinderartige Form mit dem einheitlichen, konstanten Durchmesser des Kontaktbuchsen-Element an.

In einer alternativen oder ergänzenden Ausführungsform wird das Kontaktbuchsen-Element der aufnahmeseitigen Steckverbindungseinheit zumindest in einem axialen Abschnitt aus einer Vielzahl von elastisch verformbaren Streben gebildet, bevorzugt korbartig oder lamellenartig. In einer Ausgestaltung sind die Streben drahtförmig und/oder mit einer Windung gebogen. Eine elastische, radiale Verdrängung und Aufweitung des beim Herstellen des Berührkontakt kann so für ein zuverlässiges elektrisches Verbinden erzielt werden. In einer Ausgestaltung sind die Streben durch Stanzen aus einem Blech hergestellt, erstrecken sich alle axial parallel und/oder sind in Umfangrichtung verteilt (also verteilt und voneinander beabstandet). In einer Ausgestaltung erstreckt sich der verengte Bereich axial innerhalb des axialen Abschnitts, der aus der Vielzahl von elastisch verformbaren Streben gebildet wird.

In einer Ausgestaltung sind der verengte Bereich und der axiale Abschnitt deckungsgleich. Bevorzugt erstreckt sich der verengte Bereich über den gesamten axialen Abschnitt und wird durch die Stege, die insbesondere Lamellen sein könne, gebildet, so dass beim Anschließen das Kontaktstecker-Element die Stege (bzw. Lamellen) elastisch radial nach außen verformt, so dass der Berührkontakt zwischen den elastisch verformten Stegen (bzw. Lamellen) und dem Kontaktstecker-Element erzeugt wird.

In einer Ausgestaltung ist das Kontaktbuchsen-Element und/oder dessen Stege aus Blech hergestellt und/oder eine Materialdicke von mindestens 0,1 mm, bevorzugt mindestens 0,15 mm und/oder höchstens 0,3 mm, bevorzugt höchstens 0,2 mm ist vorgesehen. Ein optimales elastisches Verformen für eine zuverlässige Kontaktierung, die auch zur störungsfreien oder störungsrobusten Übertragung von digitalen Signaldaten geeignet ist, über die Lebensdauer kann so ermöglicht werden. Insbesondere wird durch die Ausgestaltung verhindert, dass es über die Lebensdauer zu einer merklichen Erhöhung des Übergangswiderstands kommt.

In einer Ausgestaltung, die auf alle vorhergehenden und nachfolgenden Ausführungsformen und Ausgestaltungen angewendet werden kann, ist das Kontaktstecker-Element stiftartige geformt und/oder ist ein Kontaktstift. Ein Kontaktstift ist in einer Ausgestaltung ein länglicher, zylinderförmiger Pin bevorzugt aus Vollmaterial und/oder mit einem abgerundeten freien Ende. Bevorzugt beträgt der Durchmesser des stiftartig geformten Kontaktstecker-Elements mindestens 2,5 mm und/oder höchstens 5 mm. In einer Ausgestaltung des Kontaktstecker-Elements, das zur Übertragung von digitalen Signaldaten vorgesehen ist, beträgt der Durchmesser mindestens 3,5 mm und/oder höchstens 4,5 mm.

In einer Ausgestaltung, insbesondere in der ein Kontaktstecker-Element nicht für die Übertragung von digitalen Signaldaten, sondern ausschließlich zur Energieversorgung vorgesehen ist, kann das Kontaktstecker-Element einen ersten axialen Abschnitt mit einem größeren Durchmesser und einen zweiten daran angrenzenden Abschnitt mit einem kleineren Durchmesser verglichen mit dem ersten axialen Abschnitt haben. Bevorzugt endet der zweite axiale Abschnitt mit einem freien Ende des Kontaktstecker-Elements. In einer alternativen oder ergänzenden Ausgestaltung kann das Kontaktstecker-Element eine Zweikant-Querschnittsform haben. Insbesondere beträgt der Durchmesser des ersten axialen Abschnitts mindestens 3,5 mm und/oder höchstens 4,5 mm. Vorzugsweise beträgt der Durchmesser des zweiten axialen Abschnitts mindestens 1 mm und/oder höchstens 2 mm weniger als der Durchmesser des ersten axialen Abschnitts. Vorzugsweise beträgt der Durchmesser des zweiten axialen Abschnitts mindestens 2,5 mm und/oder höchstens 3 mm. Durch das Vorsehen unterschiedlicher Durchmesser und eines geringeren Durchmessers für solche Kontaktstecker-Elemente ohne digitale Datensignalübertragungsfunktion kann die Steckkraft eines Steckverbindungsmoduls mit mehreren Steckverbindungseinheiten reduziert werden. In einer Ausgestaltung sind mehrere, der oben beschriebenen Kontaktstecker-Elemente in einem zubehörseitigen Steckverbindungsmodul eines Zubehörgefäßes umfasst.

In einer Ausführungsform, in der die aufnahmeseitige Steckverbindungseinheit das Kontaktbuchsen-Element aufweist, ist ein Kabel an dem Kontaktbuchsen-Element befestigt, insbesondere unmittelbar. Eine direkte Datensignalübertragung auf das Kabel kann so ermöglicht werden. In einer alternativen oder ergänzenden Ausführungsform weist das Kontaktbuchsen-Element der aufnahmeseitigen Steckverbindungseinheit eine federnde Befestigungseinrichtung für das Kabel auf. Es kann so erreicht werden, dass durch das Federn Kräfte durch Relativbewegungen zwischen dem Zubehörgefäß und dem Basisgerät durch die federnde Befestigungseinrichtung aufgenommen werden können, so dass die Befestigung des Kabels an dem Kontaktbuchsen-Element nicht dazu führt oder verringert, dass das Kontaktbuchsen-Element von dem Kabel festgehalten wird, wenn es sich mit dem Kontaktstecker-Element mitbewegen soll. Relativbewegungen am Berührkontakt können so verringert oder vermieden werden. Eine besonders zuverlässige Signaldatenübertragung kann so ermöglicht werden. In einer Ausgestaltung ist die Befestigungseinrichtung durch Krimpen realisiert und/oder der für das Krimpen plastisch umgeformte Abschnitt des Kontaktbuchsen-Elements ist über eine federnde Verbindung der Befestigungseinrichtung mit dem restlichen Teil des Kontaktbuchsen-Elements federnd verbunden.

In einer Ausgestaltung ist vorgesehen, dass sich der Hohlkörper länglich in axialer Richtung erstreckt und dass das Kontaktbuchsen-Element mit einem radialen Spiel in dem Hohlkörper angeordnet ist, wenn das Zubehör nicht an die Aufnahmeeinrichtung angeschlossen ist.

In einer Ausgestaltung ist vorgesehen, dass das Kontaktbuchsen-Element im angeschlossenen Zustand so radial aufgeweitet ist oder durch das Anschließen so weit radial aufgeweitet wird, dass der Kontaktbuchsen-Element in einer Querschnittsebene kein radiales Spiel zum Hohlkörper aufweist und/oder an dem Hohlkörper anliegt.

In einer Ausgestaltung ist vorgesehen, dass der Hohlkörper zylinderförmig ist und/oder eine Hülse ist, vorzugsweise aus Metall, insbesondere aus elektrisch leitendem Metall. Vorzugsweise hat der Hohlkörper eine Materialdicke von mindestens 0,3 mm und/oder höchstens 0,5 mm. Insbesondere hat der Hohlkörper ein radiales Spiel in einem Bauraum eines Gehäuseabschnitts, das lediglich wegen eines toleranzbedingten Einbauspiels z.B. zwischen 0,05 mm und 0,15 mm vorliegt. Eine enge Führung, die jedoch Beweglichkeit auch für den Hohlkörper zulässt, wird so ermöglicht.

In einer Ausgestaltung ist das Kontaktbuchsen-Element axial beweglich in einem Gehäuseabschnitt vorgesehen. Insbesondere weist der Gehäuseabschnitt zwei bevorzugt ringartige Anschlagsflächen auf, die das axiale Spiel für die axiale freie Beweglichkeit des Kontaktbuchsen-Elements im montierten Zustand begrenzt.

Insbesondere hat die ringartige Anschlagsfläche, die dem Basisgerät zugewandt ist, im Querschnitt von oben betrachtet eine C-Form. Die Befestigungseinheit, insbesondere mindestens ein Arm zum plastischen Verformen für ein Einklemmen eines Kabels, kann auf diese Weise radial vorstehen, um in dem durch die C-Form gebildeten, axialen Spalt geführt zu werden, um die axiale Beweglichkeit nicht zu beschränken.

In einer Ausgestaltung ist vorgesehen, dass der Hohlkörper in einen Gehäuseabschnitt derart montiert ist, dass sich der Hohlkörper mit einem axialen Spiel von bevorzugt mindestens 0,1 mm und/oder höchstens 0,2 mm axial in dem Gehäuseabschnitt beweglich ist. In einer Ausgestaltung ist der Gehäuseabschnitt so geformt, dass der Hohlkörper an beiden axialen Enden durch ringartige Anschlagsflächen des Gehäuseabschnitts in dessen axialer Bewegungsfreiheit begrenzt wird, was insbesondere das axiale Spiel durch den axialen Abstand zwischen den beiden Anschlagflächen definiert.

In einer Ausgestaltung gehört der Gehäuseabschnitt zur (aufnahmeseitigen oder zubehörseitigen) Steckverbindungseinheit und/oder für jede Steckverbindungseinheit ist jeweils ein Gehäuseabschnitt vorgesehen. In einer Ausgestaltung mit einem (aufnahmeseitigen oder zubehörseitigen) Steckverbindungsmodul mit mehreren Steckverbindungseinheiten sind die Gehäuseabschnitte bevorzugt einstückig und/oder können insgesamt aus einem oberen Gehäusemodulteil und einem unteren Gehäusemodulteil gebildet werden, die vorzugsweise durch Spritzguss hergestellt wurden. Insbesondere wird zur Montage das Kontaktbuchsen-Element, bevorzugt zusammen mit bzw. in dem Hohlkörper, in das untere Gehäusemodulteil platziert und (wenn dies auch für alle anderen Steckverbindungseinheiten des Steckverbindungsmodul erfolgt ist) das obere Gehäusemodulteil von oben auf das untere Gehäusemodulteil gesetzt und verbunden (vorzugsweise durch Einhaken und/oder Kleben), so dass das Kontaktbuchsen-Element mit einem axialen Spiel beweglich montiert ist. Die eine axiale Anschlagsfläche wird dann durch das untere Gehäusemodulteil und die andere axiale Anschlagsfläche durch das obere Gehäusemodulteil gebildet. Insbesondere wird das Kabel bereits vor dieser Montage an dem Kontaktbuchsen-Element befestigt und/oder das untere Gehäusemodulteil weist einen axialen Spalt auf, so dass das Kontaktbuchsen-Element bis zur Anschlagfläche eingefügt werden kann, während die Befestigungseinheit und/oder das Kabel seitlich den Spalt axial nach unten passiert.

In einer Ausgestaltung weist das obere Gehäusemodulteil eines aufnahmeseitigen Steckverbindungsmoduls für jede aufnahmeseitige Steckverbindungseinheit jeweils eine axiale Einstecköffnung zum Reinstecken eines jeweiligen Kontaktstecker-Elements. Insbesondere sind die Einstecköffnungen konisch. Vorzugsweise weist eine aufnahmeseitige Steckverbindungseinheit für einer Erdung eine Metallplatte an der Oberseite des oberen Gehäusemodulteils auf, durch die sich ebenfalls die Einstecköffnung axial erstreckt, damit ein Kontaktstecker-Element in die Einstecköffnung gesteckt werden kann, um mit dem sich darunter befindlichen und mit der Metallplatte verbundenen Kontaktbuchsen-Element einen Berührkontakt zur Erdung des Zubehörgefäßes.

In einer Ausgestaltung sind von oben betrachtet die Einstecköffnungen von aufnahmeseitigen Steckverbindungseinheiten, die für das Übertragen von bevorzugt digitalen Signaldaten vorgesehen sind, kreisrund im Querschnitt geformt und/oder mit einem engsten Durchmesser, der so groß ist, dass der verengte Bereich des Kontaktbuchsen-Elements von oben betrachtet durch die Einstecköffnung sichtbar ist. Bevorzugt ist der Durchmesser der Einstecköffnung größer als der engste Durchmesser des verengten Bereichs und/oder kleiner als der Durchmesser des zylinderförmigen Teils des Kontaktbuchsen-Elements.

In einer Ausgestaltung haben von oben betrachtet die Einstecköffnungen von aufnahmeseitigen Steckverbindungseinheiten, die ausschließlich für das Versorgen eines angeschlossenen Zubehörgefäßes mit elektrischer Energie (einschließlich der Erdung) z.B. für ein Heizelement eines Zubehörgefäßes vorgesehen sind, eine Langlochform. In einer Ausgestaltung ist ein kreisrunde Einstecköffnung in der Mitte zwischen zwei Einstecköffnungen mit einer Langlochform in einer Reihe angeordnet und/oder die Einstecköffnung für die Erdung hat eine weitere Langlochform als die übrigen Einstecköffnungen mit Langlochform, insbesondere weiter als die Langlochform der benachbarten Einstecköffnung. Mechanische Spannungen können so vermieden und die Zuverlässigkeit der Datenübertragung verbessert werden. Bevorzugt sind die zwei Enden der beiden zueinander geneigten Kontaktarme einer federnden Klammer eines buchsenartigen Steckkontakts, die einen Spalt zwischen den zwei Enden bilden, von oben betrachtet durch die insbesondere langlochförmige Einstecköffnung sichtbar. Bevorzugt erstreckt sich das Langloch länglich in die Richtung einer gedachten Verbindungslinie zwischen den beiden Enden und/oder quer zum Spalt. Spannungen im angeschlossenen Zustand durch den hierdurch erzielten Toleranzausgleiches unterstützen ein besonders zuverlässiges Verbinden mithilfe von Steckverbindungen, wobei durch die aufnahmeseitigen Steckverbindungseinheiten besonders zuverlässig insbesondere digitale Signaldaten über die gesamte, vorgesehene Lebensdauer des Basisgeräts übertragen werden können.

In einer Ausgestaltung umfasst die Aufnahmeeinrichtung des Basisgeräts und/oder das Zubehörgefäß (insbesondere an dessen Unterseite) jeweils ein Steckverbindungsmodul mit mehreren Steckverbindungseinheiten. Insbesondere sind die Steckverbindungseinheiten in axialer Richtung betrachtet nebeneinander angeordnet, um eine Reihe zu bilden. Bevorzugt ist die Reihe gebogen, vorzugsweise mit einem konstanten Radius, der insbesondere mindestens 30 mm und/oder höchstens 40 mm beträgt. Eine besonders zuverlässige Datenübertragung kann so ermöglicht werden. In einer Ausgestaltung beträgt der Winkel-Abstand zwischen zwei benachbarten Steckverbindungseinheiten 20°.

In einer Ausgestaltung hat ein (aufnahmeseitiges und/oder zubehörseitiges) Steckverbindungsmodul insgesamt zwei (bevorzugt genau zwei) Steckverbindungseinheiten, die zur Übertragung von bevorzugt digitalen Signaldaten und/oder für eine 12 V (alternativ 5 V oder 3,3 V) Stromversorgung (insbesondere Gleichstromversorgung) für die Signalverarbeitungseinheit und/oder mindestens einen Sensor) vorgesehen sind, eine Steckverbindungseinheit für Erdung und/oder zwei bis drei Steckverbindungseinheiten, die ausschließlich zur Energieversorgung bevorzugt für Netzspannung (z.B. 220 V) zusätzlich zur Steckverbindungseinheit für die Erdung vorgesehen sind. Eine besonders zuverlässige Daten- und Energieversorgungsschnittstelle kann so erhalten werden.

In einer Ausgestaltung umfasst das Zubehörgefäß mindestens einen Sensor, bevorzugt einen oder zwei Temperatursensoren, einen oder mehrere Hall-Sensoren und/oder einen Nahfeldsender und Nahfeldempfänger. Eine Messung des Hall-Sensors und/oder des Temperatursensors können so durch den Berührkontakt zwischen der aufnahmeseitigen Steckverbindungseinheit und der zubehörseitigen Steckverbindungseinheit an die Steuerung der Küchenmaschine übermittelt werden.

In einer Ausgestaltung weist das Zubehörgefäß eine Signalverarbeitungseinheit auf, die bevorzugt analoge Signaldaten des mindestens einen Sensors erhält (bevorzugt kabelgebunden), verarbeitet und in Form von digitalen Signaldaten durch den Berührkontakt zwischen der aufnahmeseitigen Steckverbindungseinheit und der zubehörseitigen Steckverbindungseinheit an die Steuerung des Basisgeräts übermittelt.

Ein weiterer Aspekt der Erfindung betrifft ein Zubehörgefäß für das Basisgerät insbesondere gemäß dem eingangs beschriebenen Aspekt des Basisgeräts zum Zubereiten einer Speise, wobei das Zubehörgefäß eine Signalverarbeitungseinheit und mindestens eine zubehörseitige Steckverbindungseinheit für ein elektrisches Anschließen an die aufnahmeseitige Steckverbindungseinheit des Basisgeräts umfasst, so dass sich im angeschlossenen Zustand zumindest ein Teil der zubehörseitigen Steckverbindungseinheit mit einem Teil der aufnahmeseitigen Steckverbindungseinheit mitbewegen kann, wenn das Zubehörgefäß an die Aufnahmeeinrichtung elektrisch angeschlossen ist. Die oben beschriebenen Ausführungsformen, Ausgestaltungen und Vorteile gelten auch für diesen Aspekt der Erfindung.

Ein weiterer Aspekt der Erfindung betrifft ein System, insbesondere eine Küchenmaschine, mit einem Basisgerät und einem Zubehörgefäß gemäß den beiden vorhergehend beschriebenen Aspekten der Erfindung zur Lösung der Aufgaben. Die oben beschriebenen Ausführungsformen, Ausgestaltungen und Vorteile gelten auch für diesen Aspekt der Erfindung.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung eines Grundgeräts mit einer Aufnahmeeinrichtung;
- Figur 2:: Schematische Darstellung eines Zubehörgefäßes und eines Grundgeräts, insbesondere dem Grundgerät der Figur 1;
- Figur 3:: Explosionsdarstellung eines Steckverbindungsmodul mit mehreren Steckverbindungseinheiten mit Kontaktbuchsen-Elementen;
- Figur 4:: Längsschnittdarstellung einer Steckverbindungseinheit mit einem Kontaktbuchsen-Element; und
- Figur 5:: Schematische Darstellung einer Unterseite eines Zubehörgefäßes mit einem Steckverbindungsmodul mit mehreren Kontaktstecker-Elementen.

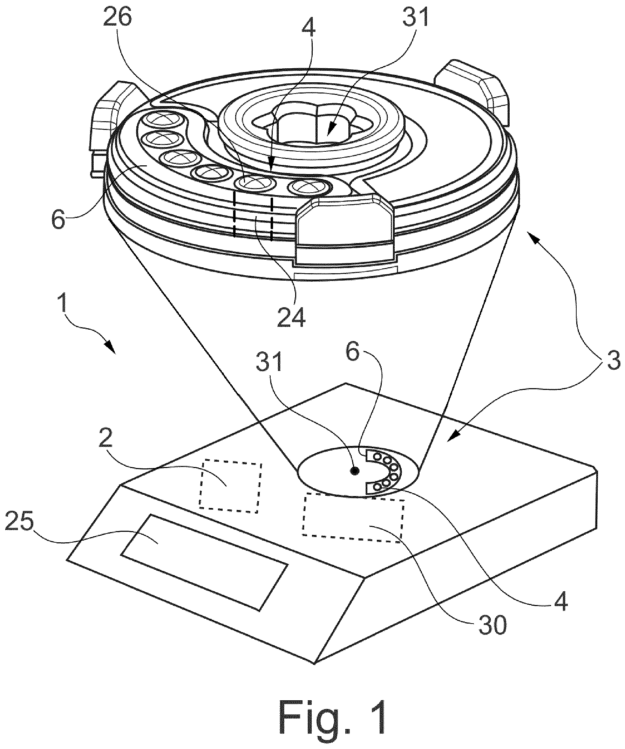

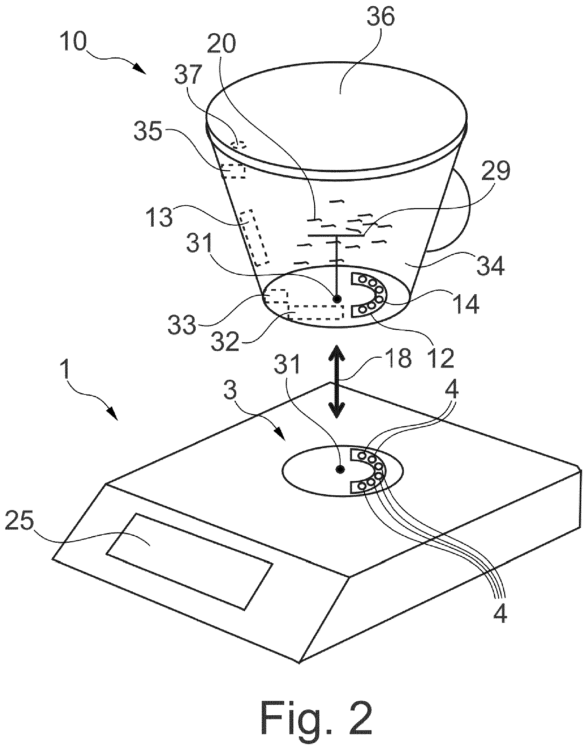

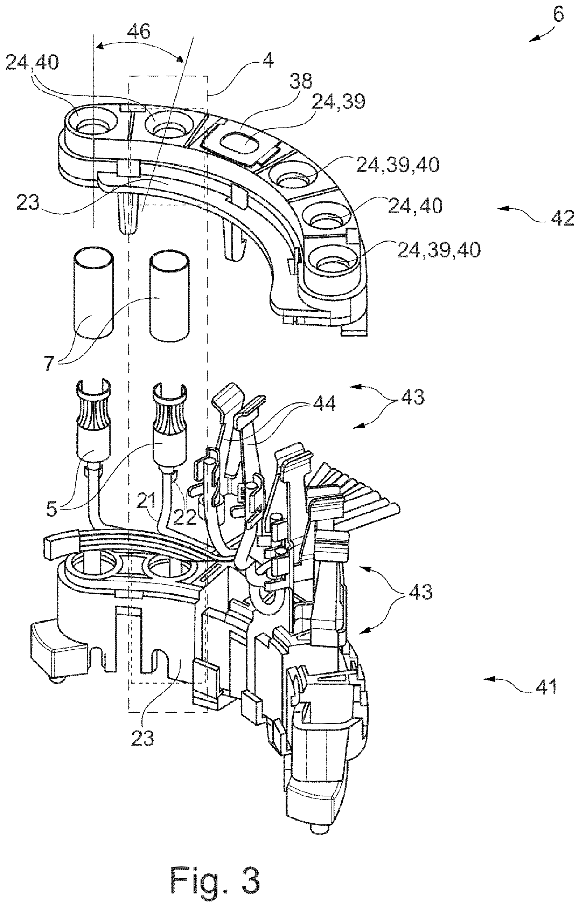

Die Figur 1 zeigt ein Basisgerät 1 für eine Küchenmaschine zum Zubereiten einer Speise 20, wobei das Basisgerät 1 eine Steuerung 2, eine Benutzerschnittstelle 25, insbesondere in Form eines Touchscreen-Displays, und eine Aufnahmeeinrichtung 3 zum Aufnehmen und elektrischen Anschließen eines wechselbaren Zubehörgefäßes 10 (vgl. Fig. 2) umfasst, wobei die Aufnahmeeinrichtung 3 mindestens eine aufnahmeseitige Steckverbindungseinheit 4 für das elektrische Anschließen eines wechselbaren Zubehörgefäßes umfasst. Die aufnahmeseitige Steckverbindungseinheit 4 ist im montierten Zustand zumindest teilweise beweglich, derart, dass sich zumindest ein Teil der aufnahmeseitigen Steckverbindungseinheit (siehe z.B. das Kontaktbuchsen-Element 5 in Fig. 3) mit einem Zubehörgefäß 10 mitbewegen kann, wenn es über die aufnahmeseitige Steckverbindungseinheit 4 an die Aufnahmeeinrichtung 3 elektrisch angeschlossen ist und eine Speise 20 zubereitet wird. Hierauf wird später exemplarisch anhand der Fig. 2 und 3 noch genauer eingegangen werden.

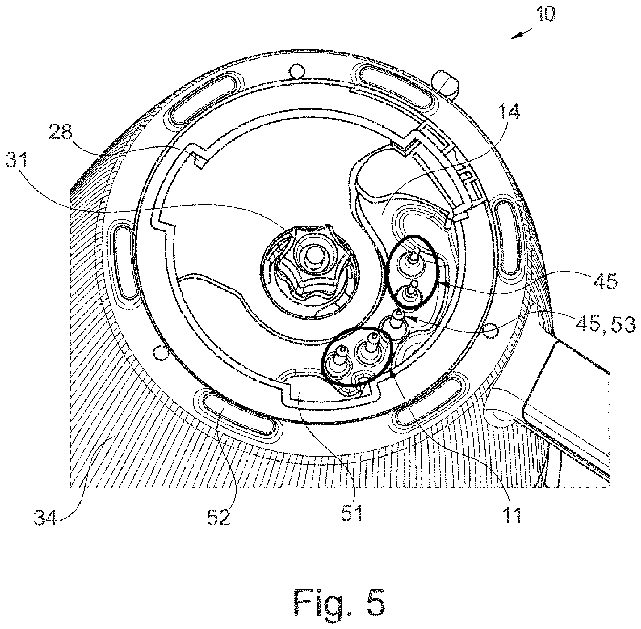

Der Ausschnitt in Fig. 1 zeigt die Aufnahmeeinrichtung 3 vergrößert, die ein aufnahmeseitiges Steckverbindungsmodul 6 umfasst, in das fünf - optional sechs wie dargestellt - Steckverbindungseinheiten 4 mit jeweils einer Einstecköffnung 24 (vgl. auch Fig. 3), die in der vergrößerten Detaildarstellung der Aufnahmeeinrichtung 3 durch eine über den jeweiligen Einstecköffnungen 24 kreuzartig geschlitzten Gummiabdeckung 26, die lediglich zum Schutz gegen Feuchtigkeit und Fremdkörper im nicht-angeschlossenen Zustand dient, überdeckt sind. In Fig. 1 ist nur eine der vorhandenen Einstecköffnungen 24 repräsentativ für die übrigen Steckverbindungseinheiten 4 durch gestrichelte Linien angedeutet. Insbesondere hat die Aufnahmeeinrichtung 3 insgesamt eine kreisrunde und/oder scheibenartige Form, vorzugsweise mit mindestens drei Führungs- und/oder Verriegelungseinrichtungen 27, die in Umfangrichtung verteilt positioniert sind, wenn kein Zubehörgefäß 10 von der Aufnahmeeinrichtung 3 aufgenommen, angeschlossen oder verriegelt ist. Zur Verriegelung wird ein Teil der Führungs- und Verriegelungseinrichtungen 27 in Umfangrichtung gedreht, um in einen Hinterschnitt 28 (vgl. z.B. Fig. 5) seines Zubehörgefäßes 10 zu greifen und so das Zubehörgefäß 10 in der aufgenommenen Position verriegelt. Allerdings entstehen bei der Speisenzubereitung häufig Vibrationen, die trotz der Verriegelung zu Relativbewegungen zwischen dem verriegelten Zubehörgefäß 10 und dem Basisgerät 1 führen. Insbesondere entstehen diese Vibrationen im Betrieb (z.B. Speisenbewegungen durch Kochen, Mischen und/oder Schneiden) und/oder werden durch den Elektromotor 30, der das Misch- oder Schneidwerkzeug 29 oder die mechanische Schnittstelle 31 für das Misch- oder Schneidwerkzeug 29 antreibt, verursacht. Zudem entstehen auch Relativbewegungen zwischen dem angeschlossenen Zubehörgefäß 10 und dem Basisgerät 1, wenn die Speise 20 ohne ein Verriegeln durch die Führungs- und/oder Verriegelungseinrichtungen 27 zubereitet wird. Dies ist beispielsweise bei geringen Drehzahlen eines Misch- oder Schneidwerkzeugs 29 bzw. der mechanischen Schnittstelle 31 (vgl. Fig. 2) möglich, das durch einen Elektromotor 30 mithilfe einer mechanischen Schnittstelle 31 zur Drehmomentübertragung für das Misch- oder Schneidwerkzeug bzw. die Werkzeugaufnahme angetrieben wird.

Mithilfe der Steuerung 2, die über die Benutzerschnittstelle 25 mit dem Benutzer interagieren kann, können gemeinsam mit dem Benutzer Rezeptschritte eines digitalen Rezeptes abarbeiten werden und hierfür Signaldaten von Sensoren (z.B. der Temperatursensor 33, der in Fig. 2 angedeutet ist) auswertet und den Elektromotor 30 und die Stromversorgung für z.B. das Heizelement 32 (vgl. Fig. 2) gesteuert werden.

Die Figur 2 zeigt ein Zubehörgefäß 10 für das Basisgerät 1 insbesondere der Fig. 1 zum Zubereiten einer Speise 20 in einem Gefäß 34 des Zubehörgefäßes 10, das zudem eine Signalverarbeitungseinheit 13 und mindestens eine zubehörseitige Steckverbindungseinheit 14 für ein elektrisches Anschließen an die aufnahmeseitige Steckverbindungseinheit 4 des Basisgeräts 1 umfasst, so dass sich im angeschlossenen Zustand zumindest ein Teil der zubehörseitigen Steckverbindungseinheit 14 mit einem Teil der aufnahmeseitigen Steckverbindungseinheit 4 mitbewegen kann, wenn das Zubehörgefäß 10 an die Aufnahmeeinrichtung 3 elektrisch angeschlossen ist und eine Speise 20 zubereitet wird. Die Signalverarbeitungseinheit 13 ist in einer Ausgestaltung so eingerichtet, dass die Signalverarbeitungseinheit 13 die Sensoren mit elektrischer Energie versorgt und zugleich deren Messdaten empfängt. Zu den in dem Zubehörgefäß verbauten Sensoren zählen insbesondere ein oder zwei Temperatursensoren 33 zum Messen einer Temperatur der Speise 20 in dem Gefäß 34 und/oder mindestens ein Hallsensor 35 zum Detektieren eines Referenzkörpers 37 insbesondere aus Metall oder in Form eines Magneten, der bevorzugt integriert in einem Deckel 36 des Zubehörgefäßes 10 angeordnet ist, um einen Geöffnet-Zustand oder Geschlossen-Zustand des Deckels 36 ermitteln und den Deckel 36 identifizieren zu können. In einer Ausgestaltung überträgt die Signalverarbeitungseinheit 13, die bevorzugt ein Microcontroller oder Chip ist, ein digitales Signal mit einer Identifikationsinformation des Zubehörgefäßes, einer Identifikationsinformation des Deckels 36, mit Sensormessdaten insbesondere der Temperatur und/oder einer auf Basis von Sensordaten ermittelter Zustandsinformation (insbesondere Geöffnet-Zustand oder Geschlossen-Zustand des Deckels 36) über die zubehörseitigen Steckverbindungseinheiten 14 des Steckverbindungsmoduls 12 an das Basisgeräts 1. Die Figur 2 zeigt ebenfalls angedeutet das Misch- und/oder Schneidwerkzeug 29, das über die mechanische Schnittstelle 31 von dem Basisgerät 1 angetrieben werden kann. Zum Anschließen wird das Zubehörgefäßes 10 in einer axialen Richtung 18 auf die Aufnahmeeinrichtung 3 des Basisgeräts 1 aufgesetzt, so dass die aufnahmeseitigen und zubehörseitigen Steckverbindungseinheiten 6, 12 in Berührkontakt gebracht werden, was im Folgenden exemplarisch anhand dem Ausführungsbeispiel von Fig. 3 näher erläutert wird.

Die Figur 3 zeigt ein aufnahmeseitiges oder zubehörseitiges Steckverbindungsmodul 6, 12, insbesondere das aufnahmeseitige Steckverbindungsmodul 6 der Fig. 1 und/oder Fig. 2. Im Folgenden wird das Ausgestaltungsbeispiel der Figur 3 exemplarisch für ein aufnahmeseitiges Steckverbindungsmodul 6 erläutert, das mehrere aufnahmeseitige Steckverbindungseinheiten 4 aufweist, von denen eines repräsentativ für die übrigen mit einer gestrichelten Linie markiert ist. In einer Ausgestaltung befinden sich die Steckverbindungseinheiten 4 nebeneinander in einem Winkelabstand 46 zwischen 15° und 30° vorzugsweise entlang einer gedachten kreisförmigen Linie, bevorzugt mit einem Radius von mindestens 20 mm und/oder höchstens 50 mm, besonders bevorzugt zwischen 30 und 40 mm. In einer Ausgestaltung hat das aufnahmeseitiges Steckverbindungsmodul 6 eine ringsegmentartige Form und/oder Außenkontur. Die zwei linken Steckverbindungseinheit 4 sind im montierten Zustand zumindest teilweise beweglich, derart, dass sie sich zumindest mit einem Teil, insbesondere dem Kontaktbuchsen-Element 5, mit einem angeschlossenen Zubehörgefäß 10 (bzw. mit dessen Kontaktstecker-Element 11, das z.B. in Fig. 5 gezeigt ist) mitbewegen kann. Diese zwei Steckverbindungseinheit 6 dienen dem Austausch von bevorzugt digitalen Signaldaten mit der Signalverarbeitungseinheit 13 des Zubehörgefäßes 10, bevorzugt auch zusätzlich dessen Energieversorgung, z.B. mit einer Spannung von 12 Volt (alternativ 3 V oder 5 V). In einer Ausgestaltung sind die Steckverbindungseinheiten 4 zum Austausch von digitalen Signaldaten aus Metall (z.B. Kaltband) und/oder mit einer Silber-Kuper-Beschichtung versehen)

Ferner umfasst das Steckverbindungsmodul 6 mindestens drei oder vier Steckverbindungseinheiten 4 mit einer unterschiedlichen Bauart, vorzugsweise aus einem veredelten Kaltband (also beschichtetes Metallblech, bevorzugt mit einer Silberlegierungsbeschichtung), die im montierten Zustand nicht zumindest teilweise beweglich sind, derart, dass sich zumindest ein Teil davon mit einem angeschlossenen Zubehörgefäß 10 mitbewegen könnte. Eine dieser Steckverbindungseinheiten 4 unterschiedlicher Bauart ist die dritte Steckverbindungseinheit 4, 12 von links, die für die Erdung vorgesehen ist und/oder zusätzlich mit einer Metallplatte 38 abgedeckt ist. Jede Steckverbindungseinheit 4 des Steckverbindungsmoduls 6 hat einen Gehäuseabschnitt 23 (in Fig. 3 repräsentativ nur für die zweite Steckverbindungseinheit 4 von links durch eine gestrichelte Linie angedeutet), die zu einem bevorzugt einstückigen unteren Gehäusemodulteil 41 gehört, das mit einem oberen Gehäusemodulteil 42 den Bauraum für den Hohlkörper 7 und das darin axial geführte Kontaktbuchsen-Element 5 bildet, das mithilfe einer Befestigungseinheit 22 (hier: zum Verbinden durch Crimpen) mit einem Kabel 21 verbunden ist. Das obere Gehäusemodulteil 42 weist Einstecköffnungen 24 auf, die mit Ausnahme der Steckverbindungseinheit 4 für die Erdung mit einer konischen Einmündung 40 versehen sind. Insbesondere sind die ersten beiden Einstecköffnungen 24 von links kreisrund, die dritte Einstecköffnung 24 von links ein Langloch 38, die vierte und/oder sechste Einstecköffnung 24 von links ebenfalls ein Langloch 38, und/oder die fünfte Einstecköffnung 24 von links ist kreisrund.

Die Steckverbindungseinheiten 4 mit der unterschiedlichen Bauart sind jeweils mit einer federnden Klammer 43 umgesetzt, die zwei zueinander geneigte Kontaktarme 44 aufweisen, um einen Kontaktstift 45 (vgl. Fig. 5) elektrisch verbinden zu können, derart, dass beide Kontaktarme 44 elastisch durch einen beim Anschließen eines Zubehörgefäßes 10 reingesteckten Kontaktstift 45 verdrängt werden, so dass der Kontaktstift 45 zwischen den beiden Kontaktarme 44 eingeklemmt wird. In einer Ausgestaltung haben die Einstecköffnungen 24 der Steckverbindungseinheiten 4 mit der unterschiedlichen Bauart, insbesondere zur Energieversorgung des Heizelements 32 eines angeschlossenen Zubehörgefäßes 10, einen kleineren Durchmesser als die Einstecköffnungen 11 der Steckverbindungseinheiten 4 mit den Kontaktbuchsen-Elementen 5 und/oder einen kleineren Durchmesser als die Steckverbindungseinheit 4 für die Erdung.

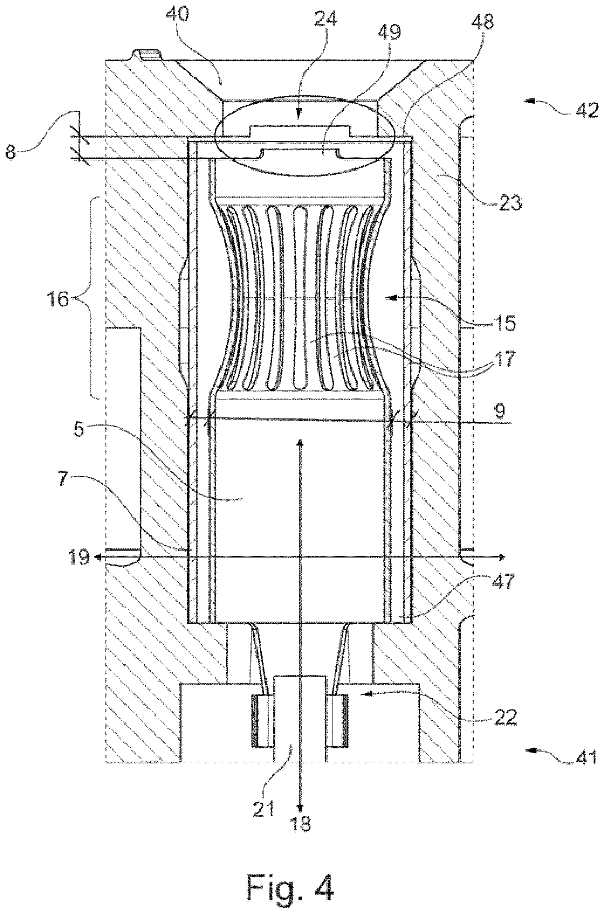

Die Figur 4 zeigt eine Schnittdarstellung durch eine Steckverbindungseinheit 4, insbesondere die erste oder zweite Steckverbindungseinheit 4 von links der Fig. 3. Das Kontaktbuchsen-Element 5 ist in dem Bauraum, der durch das untere Gehäusemodulteil 41 mit der unteren Anschlagfläche 47 und dem oberen Gehäusemodulteil 42 mit der oberen Anschlagfläche 48 axial begrenzt wird, hinsichtlich der axialen Beweglichkeit im Umfang des axialen Spiels 8 durch die genannten Anschlagflächen 47, 48 begrenzt. Zugleich hat das Kontaktbuchsen-Element 5 im nicht-angeschlossenen Zustand, der in Fig. 4 gezeigt ist, ein radiales Spiel 9 zum Hohlkörper 7, das der Durchmesserdifferenz des Innendurchmessers des Hohlkörpers 7 und des Außendurchmessers des Kontaktbuchsen-Element 5 entspricht. Der Hohlkörper ist insbesondere eine Hülse ist und/oder sich leidglich geringfügig axial und noch weniger radial bewegen kann. Insgesamt ist die Beweglichkeit des Hohlkörpers 7 verglichen mit dem Kontaktbuchsen-Element 5 in alle Richtungen im nicht-angeschlossenen Zustand geringer. Unter der unteren Anschlagfläche 48 befindet sich eine Befestigungseinheit 22, mit der das Kabel 21 befestigt ist.

Das Kontaktbuchsen-Element 5 erstreckt sich in axialer Richtung mit einem konstanten Durchmesser mit Ausnahme eines verengten Bereichs 16, der sich konkav nach innen beugt, wobei der verengte Bereich 16 über einen axialen Abschnitt durch über den Umfang verteilte Stege 17, insbesondere in Form von sich axial erstreckenden Lamellen, gebildet werden. Wenn ein Kontaktstecker-Element 11 (vgl. Fig. 5) beim Anschließen in das Kontaktbuchsen-Element 5 reingesteckt wird (in Fig. 4 nicht dargestellt), wird infolge der Reibung das Kontaktbuchsen-Element 5 an die unteren Anschlagfläche 47 gedrückt und (anschließend) die Stege 17 in radialer Richtung 19 nach außen verdrängt und elastisch verformt, während das Kontaktbuchsen-Element 5 mit C-förmigen Querschnitt (vgl. Fig. 3) ebenfalls elastisch aufgespreizt und aufgeweitet wird, bis die zylindrische Mantelfläche des Kontaktbuchsen-Elements 5 radial an die innere zylindrische Mantelfläche des hülsenförmigen Hohlkörpers 7 stößt. Es entsteht ein Berührkontakt zwischen den elastisch verformten Stegen 17 und dem Kontaktstecker-Element 11 (in Fig. 4 nicht dargestellt) mit einem federartigen Anpressdruck durch sowohl die elastisch verdrängten Stege 17 als auch die elastisch gespreizte Mantelfläche des Kontaktbuchsen-Elements 5. Wenn in diesem angeschlossenen Zustand eine Speise 20 zubereitet wird und es zu Erschütterungen und Vibrationen kommt, schwingt das Kontaktstecker-Element 11 überwiegend axial, insbesondere oszillierend. Durch das axiale Spiel 8, insbesondere in Kombination mit der geringen Reibung zwischen dem hülsenförmigen bevorzugt metallischen Hohlkörper 7 und dem ebenfalls metallischen Kontaktbuchsen-Element 5, bewegt sich das Kontaktbuchsen-Element 5 bei diesen Vibrationen (überwiegend) mit dem Kontaktstecker-Element 11 insbesondere axial mit, das von dem Kontaktbuchsen-Element 5 federartig eingeklemmt ist. Verschleiß wird so vermieden oder reduziert und eine besonders zuverlässige Übertragung von insbesondere digitalen Signaldaten über eine vorgesehen Lebensdauer des Basisgeräts 1 ermöglicht.

In einer Ausgestaltung erstreckt sich an einem oberen Ende des Kontaktbuchsen-Elements 5 ein Verlängerungsbereich 49 weiter nach oben und bildet dadurch einen Vorsprung, der kürzer als das axiale Spiel 8 ist. Zugleich ist oberhalb von dem axialen Verlängerungsbereich 49 eine Ausnehmung 50 in dem oberen Gehäusemodulteil 42 eingebracht, das so geformt ist, dass der Verlängerungsbereich 49 in die Ausnehmung 50 eintauchen kann, wenn das Kontaktbuchsen-Element 5 nach oben bewegt wird und gegen die oberen Anschlagfläche 48 stößt. Durch den Verlängerungsbereich 49 und die Ausnehmung 50 wird bewirkt, dass beim Herausziehen das Kontaktstecker-Elements 11 präzise in einer festen Drehposition gehalten wird. Der Verschleiß kann so verringert und eine besonders zuverlässige Übertragung von insbesondere digitalen Signaldaten über eine vorgesehen Lebensdauer des Basisgeräts 1 ermöglicht werden.

Die Figur 5 zeigt ein Zubehörgefäß 10 mit einem Gefäß 34 von der Unterseite, an dessen Mitte eine mechanische Schnittstelle 31 zum Antreiben durch den Elektromotor 30 des Basisgeräts 1. Das zubehörseitiges Steckverbindungsmodul 12 umfasst zwei Kontaktstecker-Elemente 11 (in Fig. 5 zur Verdeutlichung umkreist) zum Übertragen von bevorzugt digitalen Signaldaten und drei oder vier Kontaktstifte 45, von denen der Kontaktstift 45, der neben den Kontaktstecker-Elementen 11 angeordnet ist, für die Erdung vorgesehen ist. In einer Ausgestaltung haben die Kontaktstecker-Elemente 11 (bevorzugt aus einer ersten Messing-Legierung und/oder mit einer Beschichtung aus einer ersten anderen Metalllegierung), der Kontaktstift 45 für Erdung (bevorzugt aus Stahl) und/oder die Kontaktstifte 45 für die Energieversorgung (bevorzugt aus einer zweiten Messing-Legierung und/oder mit einer Beschichtung aus einer zweiten anderen Metalllegierung) unterschiedliche Materialien und/oder Oberflächenbeschichtungen. An diesen Kontaktstift 45 für die Erdung schließen sich zwei oder drei weitere Kontaktstifte 45 an. Während der Kontaktstift 45 für die Erdung (Erdungsstift 53)ebenso wie die stiftförmigen Kontaktstecker-Elementen 11 mit abgerundetem freien Ende einen bevorzugt konstanten Pin-Durchmesser haben, weisen die restlichen Kontaktstifte 45 (in Fig. 5 zur Verdeutlichung umkreist) ausgehend von dem Steckverbindungsmodul 12 zunächst einen konstanten Pin-Durchmesser wie bei dem Kontaktstift 45 für die Erdung auf, der sich stufenartig auf einen um mindestens 20 % geringeren Durchmesser verändert, der sich bevorzugt konstant über bis zum freien Ende axial fortsetzt (abgesehen von der Abrundung des feien Endes). Der letztgenannte Abschnitt ist so lang, dass beim Anschließen nur der Abschnitt des Kontaktstiftes 45 mit dem geringeren Durchmesser in das Kontaktbuchsen-Element 5 eindringt und den Berührkontakt herstellt.

Die Fig. 5 zeigt ferner Führungsöffnungen 51, die es den Führungs- und Verriegelungseinrichtungen 27 (vgl. Fig. 1) ermöglichen, in die Unterseite des Zubehörgefäßes 10 einzutauchen und auf diese Weise sowohl aufzunehmen als auch bei Bedarf mithilfe der Hinterschnitte 28 zu verriegeln. Füße 52, die sich am Rand der Unterseite des Zubehörgefäßes 10 in Umfangrichtung verteilen, sorgen für ein stabiles Aufsetzen auf dem Basisgerät 1. Vibrationen bei der Speisenzubereitung könnten so teilweise absorbiert und reduziert werden, so dass Verschleiß der Kontaktstecker-Elemente 11 und/oder der Kontaktbuchsen-Elemente 5 verringert und eine besonders zuverlässige Übertragung von insbesondere digitalen Signaldaten über eine vorgesehen Lebensdauer des Basisgeräts 1 ermöglicht wird. Insbesondere sind die Füße 52 aus gummielastischem Material.

### Bezugszeichenliste:

- 1: Basisgerät
- 2: Steuerung
- 3: Aufnahmeeinrichtung
- 4: Aufnahmeseitige Steckverbindungseinheit
- 5: Kontaktbuchsen-Element
- 6: Aufnahmeseitiges Steckverbindungsmodul
- 7: Hohlkörper
- 8: Axiales Spiel
- 9: Radiales Spiel
- 10: Zubehörgefäß
- 11: Kontaktstecker-Element
- 12: Zubehörseitiges Steckverbindungsmodul
- 13: Signalverarbeitungseinheit
- 14: Zubehörseitige Steckverbindungseinheit
- 15: Verengter Bereich
- 16: Axialer Abschnitt
- 17: Streben
- 18: Axiale Richtung
- 19: Radiale Richtung
- 20: Speise
- 21: Kabel
- 22: Befestigungseinheit
- 23: Gehäuseabschnitt
- 24: Einstecköffnung
- 25: Benutzerschnittstelle
- 26: Gummiabdeckung
- 27: Führungs- und Verriegelungseinrichtung
- 28: Hinterschnitt
- 29: Misch- oder Schneidwerkzeug
- 30: Elektromotor
- 31: mechanische Schnittstelle
- 32: Heizelement
- 33: Temperatursensor
- 34: Gefäß
- 35: Hallsensor
- 36: Deckel
- 37: Referenzkörper
- 38: Metallplatte
- 39: Langloch
- 40: konische Einmündung
- 41: unteres Gehäusemodulteil
- 42: oberes Gehäusemodulteil
- 43: federnde Klammer
- 44: Kontaktarme
- 45: Kontaktstift
- 46: Winkelabstand
- 47: untere Anschlagfläche
- 48: obere Anschlagfläche
- 49: Verlängerungsbereich
- 50: Ausnehmung
- 51: Führungsöffnungen
- 52: Füße
- 53: Erdungsstift

## Patentansprüche

1. Basisgerät (1) für eine Küchenmaschine zum Zubereiten einer Speise (20), wobei das Basisgerät (1) eine Steuerung (2) und eine Aufnahmeeinrichtung (3) zum Aufnehmen und elektrischen Anschließen eines wechselbaren Zubehörgefäßes (10) umfasst, wobei die Aufnahmeeinrichtung (3) mindestens eine aufnahmeseitige Steckverbindungseinheit (4) für das elektrische Anschließen umfasst, **dadurch gekennzeichnet, dass** die aufnahmeseitige Steckverbindungseinheit (4) im montierten Zustand zumindest teilweise beweglich ist, derart, dass sich zumindest ein Teil der aufnahmeseitigen Steckverbindungseinheit (4) mit einem Zubehörgefäß (10) mitbewegen kann, wenn es über die aufnahmeseitige Steckverbindungseinheit (4) an die Aufnahmeeinrichtung (3) elektrisch angeschlossen ist.

2. Basisgerät (1) nach Anspruch 1, **dadurch gekennzeichnet, dass** die mindestens eine aufnahmeseitige Steckverbindungseinheit (4) ein Kontaktstecker-Element (11) oder ein Kontaktbuchsen-Element (5) aufweist, das sich mit einem Zubehörgefäß (10) mitbewegen kann, wenn es über die aufnahmeseitige Steckverbindungseinheit (4) an die Aufnahmeeinrichtung (3) elektrisch angeschlossen ist.

3. Basisgerät (1) nach einem der vorhergehenden Ansprüche, **dadurch gekennzeichnet, dass** die aufnahmeseitige Steckverbindungseinheit (4) so beschaffen ist, dass der zumindest eine Teil der aufnahmeseitigen Steckverbindungseinheit (4) beweglich ist und dessen axiale Beweglichkeit durch ein axiales Spiel (8) begrenzt wird, so dass sich der zumindest eine Teil der aufnahmeseitigen Steckverbindungseinheit (4) mit einem Zubehörgefäß (10) axial im Umfang des axialen Spiels (8) mitbewegen kann, wenn es über die aufnahmeseitige Steckverbindungseinheit (4) an die Aufnahmeeinrichtung (3) elektrisch angeschlossen ist.

4. Basisgerät (1) nach dem vorhergehenden Anspruch, **dadurch gekennzeichnet, dass** das axiale Spiel (8) mindestens 0,4 mm beträgt.

5. Basisgerät (1) nach einem der zwei vorhergehenden Ansprüche, **dadurch gekennzeichnet, dass** das axiale Spiel (8) höchstens 1 mm beträgt.

6. Basisgerät (1) nach einem der vorhergehenden Ansprüche, **dadurch gekennzeichnet, dass** die aufnahmeseitige Steckverbindungseinheit (4) so beschaffen ist, dass im angeschlossenen Zustand kein radiales Spiel (9) vorliegt und/oder dass eine radiale Bewegung zumindest eines Teils der aufnahmeseitigen Steckverbindungseinheit (4) nur durch ein elastisches Verformen des beweglichen Teils der aufnahmeseitige Steckverbindungseinheit (4) möglich ist.

7. Basisgerät (1) nach einem der vier vorhergehenden Ansprüche, **dadurch gekennzeichnet, dass** das axiale Spiel (8) im angeschlossenen Zustand größer ist als das radiale Spiel (9) und/oder dass das axiale Spiel (8) im nicht-angeschlossenen Zustand kleiner ist als das radiale Spiel (9).

8. Basisgerät (1) nach Anspruch 2, **dadurch gekennzeichnet, dass** der zumindest eine bewegliche Teil der aufnahmeseitigen Steckverbindungseinheit (4) das Kontaktstecker-Element (11) oder das Kontaktbuchsen-Element (5) ist.

9. Basisgerät (1) nach einem der vorhergehenden Ansprüche, **dadurch gekennzeichnet, dass** das Basisgerät (1) so eingerichtet ist, dass über die aufnahmeseitige Steckverbindungseinheit (4) im angeschlossenen Zustand ein analoges oder digitales Signal übertragen wird und/oder ein angeschlossenes Zubehörgefäß (10) mit elektrischer Energie versorgt werden kann.

10. Basisgerät (1) nach dem vorhergehenden Anspruch, **dadurch gekennzeichnet, dass** das Basisgerät (1) so eingerichtet ist, dass über nur eine aufnahmeseitige Steckverbindungseinheit (4) im angeschlossenen Zustand ein digitales Signal übertragen und ein angeschlossenes Zubehörgefäß (10) mit elektrischer Energie versorgt wird.

11. Basisgerät (1) nach einem der neun vorhergehenden Ansprüche, **dadurch gekennzeichnet, dass** die aufnahmeseitige Steckverbindungseinheit (4) so eingerichtet ist, dass wenn ein Zubehörgefäß (10) an die Aufnahmeeinrichtung (3) angeschlossen wird, das Kontaktstecker-Element (11) axial in das Kontaktbuchsen-Element (5) eingeführt wird und/oder sich das Kontaktbuchsen-Element (5) in eine radiale Richtung (9), die quer zur axialen Richtung (8) orientiert ist, elastisch aufweitet, um das Kontaktstecker-Element (11) aufzunehmen und einen Berührkontakt für das elektrische Verbinden des Basisgeräts (1) mit einem Zubehörgefäß (10) herzustellen.

12. Basisgerät (1) nach einem der zehn vorhergehenden Ansprüche, **dadurch gekennzeichnet, dass** die aufnahmeseitige Steckverbindungseinheit (4) das Kontaktbuchsen-Element (5) aufweist, wobei das Kontaktbuchsen-Element (5) im Querschnitt betrachtet eine C-Form hat und/oder axial in einem sich axial erstreckenden Hohlkörper (7), der in der aufnahmeseitigen Steckverbindungseinheit (4) montiert ist, geführt ist.

13. Basisgerät (1) nach einem der elf vorhergehenden Ansprüche, **dadurch gekennzeichnet, dass** die aufnahmeseitige Steckverbindungseinheit (4) das Kontaktbuchsen-Element (5) aufweist, wobei das Kontaktbuchsen-Element (5) eine axiale Durchgangsöffnung mit einem verengten Bereich (15) aufweist und/oder das Kontaktbuchsen-Element (5) zumindest in einem axialen Abschnitt (16) aus einer Vielzahl von elastisch verformbaren Streben (17) gebildet wird.

14. Basisgerät (1) nach einem der zwölf vorhergehenden Ansprüche, **dadurch gekennzeichnet, dass** die aufnahmeseitige Steckverbindungseinheit (4) das Kontaktbuchsen-Element (5) aufweist, wobei an dem Kontaktbuchsen-Element (5) ein Kabel (21) befestigt ist und/oder wobei das Kontaktbuchsen-Element (5) eine federnde Befestigungseinrichtung (22) für das Kabel (21) aufweist.

15. Zubehörgefäß (10) für das Basisgerät (1) nach einem der vorhergehenden Ansprüche zum Zubereiten einer Speise (20), wobei das Zubehörgefäß (10) eine Signalverarbeitungseinheit (13) und mindestens eine zubehörseitige Steckverbindungseinheit (14) für ein elektrisches Anschließen an die aufnahmeseitige Steckverbindungseinheit (4) des Basisgeräts (1) umfasst, so dass sich im angeschlossenen Zustand zumindest ein Teil der zubehörseitigen Steckverbindungseinheit (14) mit einem Teil der aufnahmeseitigen Steckverbindungseinheit (4) mitbewegen kann, wenn das Zubehörgefäß (10) an die Aufnahmeeinrichtung (3) elektrisch angeschlossen ist.
